# EUROPÄISCHE PATENTANMELDUNG

(11) **EP 4 329 065 A1**
(43) Veröffentlichungstag der Anmeldung: **28.02.2024**
(21) Anmeldenummer: 22191412.0
(22) Anmeldetag: 22.08.2022
(51) Int. Cl.: H01M 50/249, H01M 50/258, H01M 50/269

(54) **BATTERIETRÄGERMODUL ZUR BILDUNG EINES BATTERIETRÄGERS SOWIE BATTERIETRÄGER**

(71) Anmelder: Nemak, S.A.B. de C.V., 66017 García, Nuevo León (MX)
(72) Erfinder: Koch, Tammo, 65195 Wiesbaden (DE); Bischoff, Thomas, 80639 München (DE); Byczynski, Glenn Edwin, N8N 2M1 Tecumseh Ontario (CA); List, Sascha Florian, 65510 Idstein (DE); Scheil, Jan, 65185 Wiesbaden (DE); Müller, Andreas, 65185 Wiesbaden (DE); Daphale, Vijay Bajirao, 48307 Michigan (US); Lefevre, Justin, 48103 Michigan (US); Nitz, Julia, 63225 Langen (DE)
(74) Vertreter: Cohausz & Florack

(57) **Zusammenfassung**

Die Erfindung betrifft ein Batterieträgermodul (6) zur Bildung eines mit einer Fahrzeugkarosserie verbindbaren, insbesondere aus einer Aluminiumgusslegierung gebildeten, Batterieträgers (2), umfassend: einen Aufnahmebereich (16) zur Aufnahme zumindest eines als Antriebsenergiespeicher für ein elektrisch angetriebenes Fahrzeug (36) dienenden Batteriemoduls, wenigstens drei miteinander verbundene Wände (8, 10, 12), und eine erste Außenseite und eine zweite Außenseite, wobei an der ersten Außenseite wenigstens ein erstes Verbindungselement (18) und an der zweiten Außenseite wenigstens ein zu dem ersten Verbindungselement (18) korrespondierendes zweites Verbindungselement (20) angeordnet ist, und wobei die Wände (8, 10, 12) und die Verbindungselemente (18, 20) derart angeordnet sind, dass mehrere, vorzugsweise gleichartige, Batterieträgermodule (6) in Reihe miteinander verbindbar sind. Die Erfindung betrifft ebenfalls einen Batterieträger.

## Beschreibung

Die vorliegende Erfindung betrifft ein Batterieträgermodul zur Bildung eines mit einer Fahrzeugkarosserie verbindbaren, insbesondere aus einer Aluminiumgusslegierung gebildeten, Batterieträgers umfassend einen Aufnahmebereich zur Aufnahme zumindest eines als Antriebsenergiespeicher für ein elektrisch angetriebenen Fahrzeugs dienenden Batteriemoduls. Die vorliegende Erfindung betrifft ebenfalls einen Batterieträger umfassend wenigstens ein vorgenanntes Batterieträgermodul sowie ein mit dem Batterieträgermodul verbundenes Abschlussmodul und/oder wenigstens zwei miteinander verbundene, vorgenannte Batterieträgermodule.

Elektrisch angetriebene Fahrzeuge der hier in Rede stehenden Art führen in der Regel eine Mehrzahl an Batteriemodulen umfassend Batteriezellen mit sich, die als Antriebsenergiespeicher dienen und die für den Fahrbetrieb benötigte elektrische Energie zur Verfügung stellen. Insbesondere handelt es sich bei einem elektrisch angetriebenen Fahrzeug der hier in Rede stehenden Art um ein Elektroauto, welches im Wesentlichen ausschließlich von einem Elektromotor oder mehreren Elektromotoren angetrieben wird. Alternativ kann der vorgenannte Batterieträger auch bei einem Hybrid-Fahrzeug eingesetzt werden, welches zusätzlich zu einem Elektromotor noch einen Verbrennungsmotor aufweist.

Im Hinblick auf das Fahrverhalten hat sich eine Platzierung der einzelnen Batteriemodule im Bodenbereich des Fahrzeugs als zielführend herausgestellt. Um dies zu ermöglichen, sind Batterieträger vorgeschlagen worden, die im Wesentlichen flach und plattenartig ausgebildet sind. Derartige Batterieträger lassen sich im Bodenbereich des Fahrzeugs anordnen und mit der Karosserie des Fahrzeugs verbinden.

Unterschiedliche Modelle elektrisch angetriebener Fahrzeuge benötigen in der Regel eine unterschiedliche Anzahl von Batteriemodulen. Um für alle Fahrzeuge einen passenden Batterieträger mit der richtigen Aufnahmekapazität bereitstellen zu können, wird eine große Anzahl unterschiedlicher Batterieträger auf dem Markt angeboten, in denen unterschiedlich viele Batteriemodule untergebracht werden können.

Die hier in Rede stehenden Batterieträger werden üblicherweise im Druckgussverfahren (englisch: High Pressure Die Casting (HPDC)) hergestellt, bei dem eine flüssige Schmelze unter hohem Druck mit einer hohen Formfüllgeschwindigkeit in eine Druckgussform gedrückt wird, wo sie dann erstarrt. Bei Druckgussverfahren kommen Dauerformen zum Einsatz, die mehrfach verwendet werden können. Die Anfertigung einer Dauerform geht mit hohen Herstellungskosten einher. Für jede Variante eines Batterieträgers muss eine spezifische Dauerform bereitgestellt werden, so dass eine große Anzahl unterschiedlicher Dauerformen bei den Herstellern der Batterieträger vorgehalten werden müssen. Diese Umstände wirken sich negativ auf die Herstellungskosten aus.

Um elektrisch angetriebene Fahrzeuge mit hohen Reichweiten realisieren zu können, sind Batterieträger mit einer hohen Aufnahmekapazität notwendig. Diese Batterieträger zeichnen sich durch große Maße aus und werden vorwiegend auf großen Druckgussmaschinen hergestellt, die regelmäßig Schließkräfte von über 4.500 kN erreichen müssen. Derartige Druckgussmaschinen sind vergleichsweise teuer in der Anschaffung und treiben so die Herstellungskosten der Batterieträger in die Höhe.

Vor diesem Hintergrund hat sich die Aufgabe ergeben, ein Batterieträgermodul der vorgenannten Art zur Verfügung zu stellen, welches eine kostengünstige Herstellung von Batterieträgern, einschließlich solcher mit hohen Aufnahmekapazität, ermöglicht. Des Weiteren soll ein Batterieträger zur Verfügung gestellt werden, welcher sich kostengünstig herstellen lässt.

Die vorgenannte Aufgabe wird erfindungsgemäß gemäß einem ersten Aspekt der vorliegenden Erfindung bei einem Batterieträgermodul zur Bildung eines mit einer Fahrzeugkarosserie verbindbaren, insbesondere aus einer Aluminiumgusslegierung gebildeten, Batterieträgers dadurch gelöst, dass das Batterieträgermodul umfasst: einen Aufnahmebereich zur Aufnahme zumindest eines als Antriebsenergiespeicher für ein elektrisch angetriebenes Fahrzeug dienenden Batteriemoduls, wenigstens drei miteinander verbundene Wände, und eine erste Außenseite und eine zweite Außenseite, insbesondere eine erste und zweite Außenseite des Batterieträgermoduls, wobei wenigstens ein erstes Verbindungselement an der ersten Außenseite und an der zweiten Außenseite wenigstens ein zu dem ersten Verbindungselement korrespondierendes zweites Verbindungselement angeordnet ist, und wobei die Wände und die Verbindungselemente derart angeordnet sind, dass mehrere, vorzugsweise gleichartige, Batterieträgermodule in Reihe miteinander verbindbar sind.

Gemäß einem zweiten Aspekt der vorliegenden Erfindung wird die genannte Aufgabe bei einem Batterieträger dadurch gelöst, dass der Batterieträger wenigstens ein Batterieträgermodul gemäß der Erfindung und zumindest ein mit dem wenigstens einen Batterieträgermodul verbundenes Abschlussmodul und/oder wenigstens zwei miteinander verbundene Batterieträgermodule gemäß der Erfindung umfasst.

Vorzugsweise bilden das wenigstens eine Batterieträgermodul und das Abschlussmodul und/oder die wenigstens zwei Batterieträgermodule im verbundenen Zustand wenigstens eine Batterieaufnahmeeinheit mit einem zwischen dem Batterieträgermodul und dem Abschlussmodul und/oder zwischen zwei Batterieträgermodulen angeordneten Aufnahmebereich. Weiterhin ist es bevorzugt, dass der der Batterieträger durch Anbringung weiterer Batterieträgermodule um weitere Batterieaufnahmeeinheiten erweiterbar ist.

Zur Herstellung eines Batterieträgers kann in einem ersten Schritt die benötigte Anzahl von Batterieträgermodulen und optional ein Abschlussmodul hergestellt werden. Anschließend kann die Montage der Batterieträgermodule und optional dem Abschlussmodul erfolgen, indem die einzelnen Module und optional das Abschlussmodul miteinander, insbesondere in Reihe, verbunden werden.

Das Batterieträgermodul weist an der ersten Außenseite wenigstens ein erstes Verbindungselement und an der zweiten Außenseite wenigstens ein zweites Verbindungselement auf. Die erste und die zweite Außenseite des Batterieträgermoduls können beispielsweise von den Stirnseiten der ersten und der zweiten Wand und/oder von einer Seitenfläche der dritten Wand gebildet werden. Das erste und das zweite Verbindungselement sind korrespondierend zueinander ausgebildet. Die Verbindungselemente sind vorzugsweise so an der ersten und zweiten Außenseite angeordnet, dass die Batterieträgermodule in Reihe hintereinander miteinander verbunden werden können. Vorzugsweise sind an den betreffenden Außenseiten jeweils wenigstens zwei Verbindungselemente vorgesehen, um eine bessere Stabilität im verbundenen Zustand sicherzustellen. Die Batterieträgermodule umfassen drei miteinander verbundene Wände, die so angeordnet sind, dass bei Zusammenfügung mehrere Batterieträgermodule jeweils zwischen zwei Batterieträgermodulen eine Batterieaufnahmeeinheit für das zumindest eine Batteriemodul gebildet wird.

Ein erfindungsgemäßer Batterieträger umfasst zumindest zwei Batterieträgermodule oder ein Batterieträgermodul und ein Abschlussmodul, so dass zumindest eine Batterieaufnahmeeinheit gebildet werden kann. Der Batterieträger kann durch Anbringung weiterer Batterieträgermodule um weitere Batterieaufnahmeeinheiten erweitert werden. Dies ist auch nachträglich möglich.

Mit einem erfindungsgemäßen Batterieträgermodul können mit mehreren gleichartigen Batterieträgermodulen Batterieträger unterschiedlicher Größe hergestellt werden, ohne dass mehrere Druckgussformen vorgehalten werden müssen. Die Kapazität des Batterieträgers kann beliebig durch die Auswahl der Anzahl von Batterieträgermodulen angepasst werden, so dass eine große Anzahl von Varianten nur mit einer Druckgussform realisiert werden kann. Dies wirkt sich positiv auf die Herstellungskosten der Batterieträger aus, da nur ein Typ von Druckgussformen benötigt wird. Darüber hinaus können auch große Batterieträger, die sich üblicherweise nur auf großen Druckgussmaschinen fertigen lassen, auf vergleichsweise kleinen Druckgussmaschinen hergestellt werden. Da die kleinen Druckgussmaschinen bedeutend günstiger als die großen Maschinen sind, können niedrigere Stückkosten realisiert werden. Zudem lassen sich die Rüstzeiten auf den Druckgussmaschinen reduzieren. Dies wirkt sich zusätzlich vorteilhaft auf die Herstellungskosten aus.

Bei einer bevorzugten Ausgestaltung umfassen die wenigstens drei miteinander verbundenen Wände eine erste Wand, eine zweite, im Wesentlichen parallel zu der ersten Wand angeordnete Wand und eine dritte, die erste und die zweite Wand verbindende Wand, wobei vorzugsweise die wenigsten drei miteinander verbundenen Wände im Wesentlichen ein U-Profil bilden. Alternativ zu der Bildung eines U-Profils kann auch ein C-Profil gebildet werden. Mehrere U-Profile oder C-Profile können so hintereinander angeordnet werden, dass die beiden freien Enden bzw. die beiden freien Enden der Schenkel des U-Profils an der dritten Wand eines benachbarten Batterieträgermoduls derart angeordnet werden können, dass zwischen der ersten, der zweiten und der dritten Wand des Batterieträgermoduls und der dritten Wand des benachbarten Batterieträgermoduls eine Batterieaufnahmeeinheit für ein Batteriemodul gebildet werden kann.

Eine weitere bevorzugte Ausgestaltung ist dadurch gekennzeichnet, dass die erste Wand und die zweite Wand jeweils ein mit der dritten Wand verbundenes Ende und jeweils ein freies Ende aufweisen, und dass an den freien Enden der ersten und der zweiten Wand jeweils ein erstes Verbindungselement und an den über die dritte Wand miteinander verbundenen Enden der ersten und der zweiten Wand jeweils ein zweites Verbindungselement angeordnet ist. Vorzugsweise können auch zumindest zwei Verbindungselemente an der dritten Wand angeordnet sein. Durch das Vorsehen von insgesamt vier Verbindungselementen können zwei Batterieträgermodule sicher miteinander verbunden werden.

Die als U-Profile oder C-Profile ausgebildeten Batterieträgermodule können dabei im eingebauten Zustand in einer ersten Ausgestaltungsvariante so angeordnet werden, dass die Batteriemodule von oben und/oder von unten in die Batterieträgermodule oder in einer zweiten Ausgestaltungsvariante von der Seite aus in die Batterieträgermodule platziert werden können. Dies trifft ebenso zu, wenn es sich um andersartige Profile, wie beispielsweise um ein z-förmiges Profil, handelt.

In der ersten Ausgestaltungsvariante ist bevorzugt, dass die erste und die zweite Wand zwischen dem freien Ende und dem mit der dritten Wand verbundenen Ende eine Länge in einem Bereich von 300 bis 500 mm, insbesondere von 350 bis 450 mm und besonders bevorzugt von 375 bis 425 mm aufweisen. Die erste und die zweite Wand sind besonders bevorzugt so zueinander angeordnet, dass ihre Außenseiten mit einem Abstand in einem Bereich von 1.000 bis 1800 mm, insbesondere von 1.200 bis 1600 mm und besonders bevorzugt von 1.300 bis 1.500 mm zueinander angeordnet sind. Die erste, die zweite und die dritte Wand können eine Höhe in einem Bereich von 100 bis 180 mm, insbesondere von 120 bis 160 mm und besonders bevorzugt von 130 bis 150 mm aufweisen.

In der zweiten Ausgestaltungsvariante ist bevorzugt, dass die erste und die zweite Wand zwischen dem freien Ende und dem mit der dritten Wand verbundenen Ende eine Länge in einem Bereich von 100 bis 180 mm, insbesondere von 120 bis 160 mm und besonders bevorzugt von 130 bis 150 mm aufweisen. Die erste und die zweite Wand sind besonders bevorzugt so zueinander angeordnet, dass ihre Außenseiten mit einem Abstand in einem Bereich von 100 bis 180 mm, insbesondere von 120 bis 160 mm und besonders bevorzugt von 130 bis 150 mm zueinander angeordnet sind. Die erste, die zweite und die dritte Wand können eine Breite in einem Bereich von 1.000 bis 1.800 mm, insbesondere von 1.200 bis 1.600 mm und besonders bevorzugt von 1.300 bis 1.500 mm aufweisen.

Des Weiteren ist es bevorzugt, dass das wenigstens eine erste und das wenigstens eine zweite Verbindungselement zur Bildung einer formschlüssigen Verbindung miteinander, insbesondere einer Schwalbenschwanzverbindung, ausgebildet sind. Im Rahmen einer formschlüssigen Verbindung kann in konstruktiv günstiger Weise eine Verbindung zwischen mehreren Batterieträgermodulen ermöglicht werden. Eine Schwalbenschwanzverbindung bietet den Vorteil einer in hohem Maße formschlüssigen Verbindung, die nicht nur quer zum Schwalbenschwanz, sondern ebenfalls in dessen Längsrichtung wirkt. Alternativ oder zusätzlich kann die Verbindung von zwei Batterieträgermodulen über eine kraftschlüssige oder eine stoffschlüssige Verbindung erfolgen.

Bei einer besonders bevorzugten Ausführungsform ist an dem wenigstens einen ersten und/oder dem wenigstens einen zweiten Verbindungselement eine Nut zur Aufnahme eines Klebers und/oder eines Dichtmittels bzw. einer Dichtung ausgebildet. Durch Platzierung eines Klebers und/oder einer Dichtung in einer entsprechend angeordneten Nut können die an Batterieträger üblicherweise gestellten Anforderungen hinsichtlich der Dichtigkeit erfüllt werden, ohne dass teure Schweißverfahren, die eine leckagefreie Abdichtung ermöglichen, angewendet werden müssen. Dies ist insbesondere an den Verbindungselementen von großer Bedeutung, da in diesen Bereichen typischerweise eine Vielzahl von Kanten aufeinandertreffen, die die Dichtigkeit betreffende Schwachstellen verursachen können. Vorzugsweise können einzelne Batterieträgermodule zunächst mittels der formschlüssigen Verbindung miteinander verbunden werden und anschließend das so gebildete Batterieträgermodul mittels des Einbringens eines Klebers bzw. einer Dichtung im Wesentlichen abgedichtet werden.

Bei einer weiteren vorteilhaften Ausgestaltung der Erfindung ist in zumindest einer der Wände wenigstens ein Kühlkanal zur Kühlung von in dem Batterieträger aufgenommenen Batteriemodulen und/oder wenigstens ein Elektronikkanal zur Unterbringung von elektronischen Bauteilen ausgebildet. Durch das Vorsehen von Kühlkanälen kann mittels des Batterieträgermoduls bereits eine zuverlässige Kühlung zur Verfügung gestellt werden, ohne dass diese aufwändig nachgerüstet werden muss. Das Vorsehen von Elektronikkanälen in dem Batterieträgermodul ermöglicht eine geschützte Unterbringung elektronischer Bauteile.

Eine weitere bevorzugte Ausgestaltung der Erfindung ist dadurch gekennzeichnet, dass der wenigstens eine Kühlkanal und/oder der wenigstens eine Elektronikkanal Durchgänge an der ersten und/oder an der zweiten Außenseite aufweist. So kann Kühlflüssigkeit durch nebeneinander angeordnete Batterieträgermodule fließen bzw. können elektronische Bauteile durch den gesamten Batterieträger verlegt werden.

Bei einer weiteren vorteilhaften Ausgestaltung der Erfindung umfasst das Batterieträgermodul ferner eine Bodenplatte. Dies ist insbesondere dann vorteilhaft, wenn der aus einzelnen Batterieträgermodulen zusammengesetzte Batterieträger so in einem Fahrzeug angeordnet wird, dass sich ein Batteriemodul von oben in das Batterieträgermodul platzieren lässt. Durch Vorsehen einer Bodenplatte können die einzelnen Batteriemodule in zuverlässiger Weise in dem Batterieträgermodul angeordnet werden. Zudem kann hierdurch eine Beschädigung der Batteriemodule durch äußere Einwirkung, insbesondere gegen Steinschlag und Feuchtigkeit vorgebeugt werden. Zudem kann durch das Vorsehen einer Bodenplatte die von dem Batterieträgermodul zur Verfügung gestellte Dichtigkeit weiter verbessert werden.

Es ist bevorzugt, dass die Bodenplatte wenigstens ein Kühlkanal zur Kühlung von in dem Batterieträger aufgenommenen Batteriemodulen und/oder wenigstens ein Elektronikkanal zur Unterbringung von elektronischen Bauteilen aufweist. Durch das Vorsehen von wenigstens einem Kühlkanal in der Bodenplatte kann mittels des Batterieträgermoduls eine zuverlässige Kühlung zur Verfügung gestellt werden, ohne dass diese aufwändig nachgerüstet werden muss. Das Vorsehen von wenigstens einem Elektronikkanal ermöglicht es, elektronische Komponenten geschützt in der Bodenplatte unterzubringen. Besonders bevorzugt sind die in der Bodenplatte und in den Wänden angeordneten Kühlkanäle bzw. Elektronikkanäle durch Durchgänge miteinander verbunden, so dass Kühlflüssigkeit von den Wänden in den Boden und umgekehrt fließen kann bzw. so dass sich elektronische Komponenten von den Wänden in den Boden erstrecken können.

Darüber hinaus hat es sich als zweckmäßig erwiesen, das Batterieträgermodul einstückig auszubilden. Durch die einstückige Ausbildung des Batterieträgermoduls lässt sich in günstiger Weise, nämlich vorzugsweise durch ein Druckgussverfahren, ein Batterieträgermodul herstellen, welches kostengünstig zu fertigen ist und zusätzlich vorteilhafte statische und dynamische Eigenschaften aufweist. Durch die einstückige Fertigung eines Batterieträgermoduls entfallen zum einen bestimmte Fertigungsschritte, da einzelne Komponenten des Batterieträgermoduls nicht nachträglich miteinander verbunden werden müssen und zum anderen können anfällige Verbindungbereiche des Batterieträgermoduls vermieden werden. Ein derartiges Batterieträgermodul kann insbesondere vorteilhafte Eigenschaften bezüglich der Biegesteifigkeit und der Torsionssteifigkeit aufweisen. Darüber hinaus bietet das Batterieträgermodul durch die Einstückigkeit vorteilhafte Eigenschaften für die Einhaltung geforderter Toleranzen, zur Erreichung von Dichtigkeitsanforderungen und für das Verhältnis Gewicht des Batterieträgermoduls zu verfügbarer Fläche für Batteriezellen.

Besonders bevorzugt ist das Batterieträgermodul einstückig aus einer Aluminiumlegierung gegossen. In diesem Zusammenhang ist es bevorzugt, dass die Aluminiumlegierung eine Aluminiumgusslegierung der 4000er Serie, eine Aluminiumgusslegierung der 5000er Serie oder eine Aluminiumlegierung der 7000er Serie ist. Des Weiteren ist es bevorzugt, dass die Aluminiumlegierung folgende Zusammensetzung in Gew-% aufweist:

| | |
|---|---|
| Mg | 3,4 bis 4,6; |
| Fe | 1,3 bis 1,7; |
| Si | ≤ 0,2; |
| Cu | ≤ 0,2; |
| Mn | ≤ 0,15; |
| Zn | ≤ 0,3; |
| Ti | ≤ 0,2; sowie |

Rest Al sowie unvermeidbare Verunreinigungen; oder
dass die Aluminiumlegierung folgende Zusammensetzung in Gew.-% aufweist:

| | |
|---|---|
| Si | 8,5 bis 10,5; |
| Mn | 0,3 bis 0,6; |
| Fe | ≤ 0,15; |
| Cu | ≤ 0,05; |
| Mg | ≤ 0,1; |
| Zr | ≤ 0,3; vorzugsweise 0,1 bis 0,3; |
| Zn | ≤ 0,05; |
| Ti | ≤ 0,15; |
| Sr | ≤ 0,03; |
| V | ≤ 0,1; sowie |

Rest Al und unvermeidbare Verunreinigungen.

Ebenfalls kann es sich bei einer solchen Aluminiumlegierung um eine Legierung mit der Bezeichnung AlSi6-11; AlMg2.5-14; AlZn2-6, AlSi9Mn oder AlMg4Fe2 handeln. Vorgenannte Gusslegierungen sind beispielsweise in der Norm DIN EN 1706 definiert. Es hat sich in der Praxis herausgestellt, dass die Verwendung der vorgenannten Aluminiumlegierungen zu einem Batterieträger mit bevorzugten statischen sowie dynamischen Eigenschaften führt, wobei zeitgleich ein reduziertes Gewicht zur Verfügung gestellt werden kann.

Eine weitere bevorzugte Ausgestaltung der Erfindung ist dadurch gekennzeichnet, dass zumindest eine Wand des Batterieträgermoduls, insbesondere die Außenseite zumindest einer Wand, zumindest teilweise eine Profilstruktur zur Versteifung des Batterieträgermoduls aufweist. Vorzugsweise umfasst die Profilstruktur im Wesentlichen horizontal verlaufende Profilstege und/oder im Wesentlichen vertikal verlaufende Profilstege. Dabei bilden die im Wesentlichen horizontal und/oder vertikal verlaufenden Profilstege vorzugsweise im Wesentlichen ein Kastenprofil oder ein Wabenprofil. Durch die Vorsehung einer Profilstruktur können insbesondere Crash-Strukturen geschaffen werden, die etwaige bei einem Unfall des Fahrzeugs entstehende Kräfte aufnehmen und die in dem Batterieträger angeordneten Batteriemodule schützen. Insbesondere die Ausgestaltung der Profilstruktur als Kastenprofil oder Wabenprofil hat sich hinsichtlich einer gusstechnischen Fertigung als vorteilhaft ergeben. Diese Crashstrukturen werden im Druckgussprozess vorzugsweise durch "Schieber" dargestellt.

Bei einer bevorzugten Ausgestaltung des Batterieträgers umfasst der Batterieträger wenigstens zwei Batterieträgermodule und ein Abschlussmodul. Bei dieser Ausgestaltungsvariante werden wenigstens zwei Batterieaufnahmeeinheiten für jeweils ein Batteriemodul gebildet. Besonders bevorzugt weist der Batterieträger ein Abschlussmodul und wenigstens drei Batterieträgermodule und insbesondere ein Abschlussmodul und wenigstens vier Batterieträgermodule auf.

Bei einer weiteren vorteilhaften Ausgestaltung der Erfindung weist das Abschlussmodul wenigstens eine Abschlusswand und wenigstens ein an der Abschlusswand angeordnetes drittes Verbindungselement auf, wobei das dritte Verbindungselement korrespondierend zu einem an einer ersten Außenseite des Batterieträgermoduls angeordneten ersten Verbindungselement ausgebildet ist und wobei das Abschlussmodul mit dem wenigstens einen Batterieträgermodul über das wenigstens eine dritte Verbindungselement und das wenigstens eine erste Verbindungselement verbunden ist. Bei dieser Ausgestaltung kann das Abschlussmodul über die an den Batterieträgermodulen vorhandenen Verbindungselemente einfach mit dem benachbarten Batterieträgermodul verbunden werden.

Eine weitere bevorzugte Ausgestaltung der Erfindung ist dadurch gekennzeichnet, dass der Batterieträger ferner ein Versteifungsmodul umfasst, wobei das Versteifungsmodul ein mindestens erstes und ein zweites Rahmenprofil aufweist, welche insbesondere als Vierkantrohre ausgebildet sind und insbesondere einen im Wesentlichen rechteckigen und besonders bevorzugt einen im Wesentlichen quadratischen Querschnitt aufweisen, wobei das erste Rahmenprofil an einer ersten Seite des Batterieträgers und das zweite Rahmenprofil an einer der ersten Seite gegenüberliegenden zweiten Seite des Batterieträgers angeordnet ist.

Vorzugsweise erstrecken sich die Rahmenprofile in Längsrichtung im Wesentlichen von einer Stirnwand des Batterieträgers bis zu einer Rückwand des Batterieträgers. Ferner ist es bevorzugt, dass jeweils wenigstens eine Längsseite des ersten und des zweiten Rahmenprofils im Wesentlichen von einer Oberkante bzw. einer Decke bis zu einer Unterkante bzw. einem Boden des Batterieträgers erstreckt.

Das mindestens eine Versteifungsmodul kann sich vorteilhaft auf die Crash-Eigenschaften des Batterieträgers auswirken, indem sie eine besondere Schutzwirkung bei einem potenziellen Seitenaufprall entfalten. Die Crash-Eigenschaften können beispielsweise über einen Crush-Test als Komponententest hinsichtlich eines zu simulierenden Seitensaufpralls ermittelt werden. Das Vorsehen mindestens eines Versteifungsmoduls ist insbesondere dann vorteilhaft, wenn Batterieträgermodule zumindest zu einer Seite hin offen ausgebildet sind, so dass die Batteriemodule von der Seite in die Batterieträgermodule platziert werden können. Besonders bevorzugt sind die Rahmenprofile so ausgebildet, dass sie zumindest mit einer Außenseite die offenen Bereiche der Batterieträgermodule abdecken. Besonders vorteilhaft wirken sich die Verstärkungsmodule auf die Crash-Eigenschaften des Batterieträgers aus, wenn sich zumindest eine Außenseite der Rahmenprofile im Wesentlichen von der Oberkante der Batterieträgermodule bis im Wesentlichen zur Unterkante der Batterieträgermodule erstreckt. Bei entsprechender Ausbildung können sich die Versteifungsmodule ebenfalls positiv auf die Dichtigkeit des Batterieträgers auswirken.

Vorzugsweise entspricht der Batterieträger, insbesondere der Batterieträger umfassend ein Versteifungsmodul, den Erfordernissen der Prüfung nach ECE-R100.

Des Weiteren ist es bevorzugt, dass das Versteifungsmodul die Steifigkeit der Rahmenprofile erhöhende Einsätze aufweist, wobei die Einsätze in die Rahmenprofile eingeschoben sind und wobei die Einsätze mit den Rahmenprofilen insbesondere über Nieten verbunden sind. Beispielsweise können die Einsätze auch mit den Rahmenprofilen verschweißt sein. Besonders bevorzugt können sich die Einsätze in Längsrichtung im Wesentlichen über die gesamte Länge der Rahmenprofile erstrecken. Die Einsätze können vorteilhafterweise so ausgebildet sein, dass sie im Querschnitt an mehreren Stellen der Innenseite der Rahmenprofile, insbesondere in den Ecken anliegen. Beispielsweise kann der Batterieträger zwei in zwei Rahmenprofilen angeordnete Einsätze aufweisen.

Die oben beschriebenen, zunächst grundsätzlich für sich alleine stehenden Ausführungsformen und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Nachfolgend wird die Erfindung anhand von Ausführungsbeispielen zeigenden Zeichnungen näher erläutert. Es zeigen jeweils schematisch:
- Fig. 1A: eine schematische Ansicht eines ersten Ausführungsbeispiels eines Batterieträgers mit einem Abschlussmodul und einem Batterieträgermodul im demontierten Zustand in Draufsicht,
- Fig. 1B: der Batterieträger aus Fig. 1A in Seitenansicht,
- Fig. 2A: eine schematische Ansicht eines zweiten Ausführungsbeispiels eines Batterieträgers mit einem Abschlussmodul und einem Batterieträgermodul im demontierten Zustand in einer Seitenansicht,
- Fig. 2B: der Batterieträger aus Fig. 2A in Draufsicht,
- Fig. 3A: der Batterieträger aus Fig. 1A im montierten Zustand,
- Fig. 3B-3E: der Batterieträger aus Fig. 3A erweitert um ein, zwei, drei und vier zusätzliche Batterieträgermodule,
- Fig. 4A: der Batterieträger aus Fig. 1A erweitert um fünf Batterieträgermodule angeordnet in einem Elektrofahrzeug,
- Fig. 4B: der Batterieträger aus Fig. 2A erweitert um fünf Batterieträgermodule angeordnet in einem Elektrofahrzeug,
- Fig. 5: Detailansicht von zwei miteinander verbundenen Batterieträgermodulen
- Fig. 6: der Batterieträger aus Fig. 3D mit einem Versteifungsmodul in Draufsicht
- Fig. 7A: ein erstes Versteifungsmodul mit einem Einsatz im Querschnitt im demontierten Zustand,
- Fig. 7B: das Versteifungsmodul aus Fig. 7A im montierten Zustand,
- Fig. 8A: ein zweites Versteifungsmodul mit einem Einsatz im Querschnitt im demontierten Zustand, und
- Fig. 8B: das Versteifungsmodul aus Fig. 8A im montierten Zustand.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

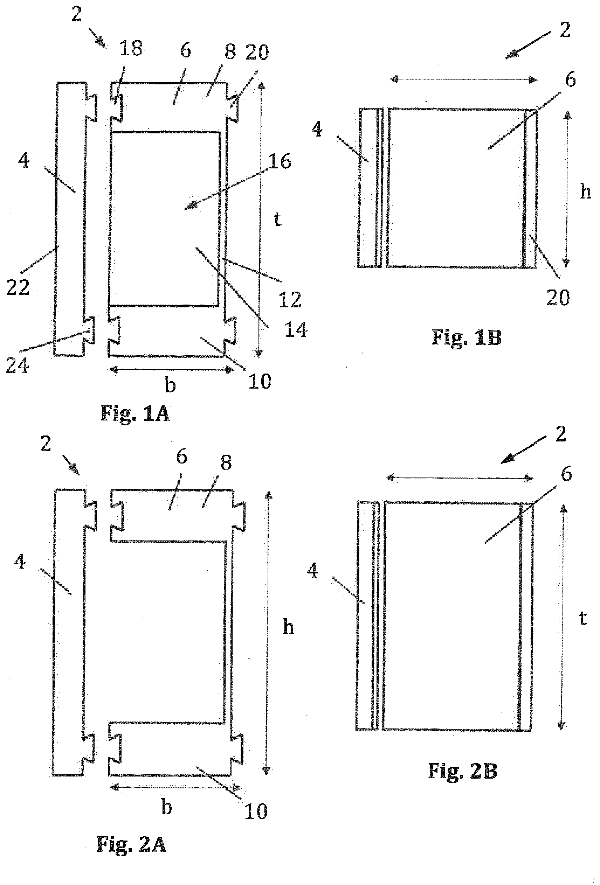

In Fig. 1A ist ein erfindungsgemäßer Batterieträger 2 mit einem Abschlussmodul 4 und einem Batterieträgermodul 6 im demontierten Zustand in Draufsicht dargestellt. Das Batterieträgermodul ist als U-Profil bzw. als C-Profil mit einer ersten und einer zweiten im Wesentlichen parallel zueinander angeordneten Wand 8, 10 und einer dritten, die erste und die zweite Wand 8, 10 an ihrem einen Ende verbindenden Wand 12 gebildet. Die drei Wände 8, 10, 12 sind an ihrer Unterseite über eine Bodenplatte 14 miteinander verbunden. Zwischen den Wänden 8, 10, 12 wird ein Aufnahmebereich 16 für ein aufzunehmendes Batteriemodul gebildet, welches hier nicht dargestellt ist. An den freien Enden der ersten und der zweiten Wand 8, 10 ist jeweils ein erstes Verbindungselement 18 ausgebildet. An den gegenüberliegenden Enden der ersten und der zweiten Wand 8, 10, welche über die dritte Wand 12 miteinander verbunden sind, ist jeweils ein zweites Verbindungselement 20 ausgebildet. Das erste Verbindungselement 18 ist als Nut ausgebildet, die mit dem als Schwalbenschwanz ausgebildeten zweiten Verbindungselement 20 eines im Wesentlichen gleichartigen Batterieträgermoduls 6 eine Schwalbenschwanzverbindung bilden kann. Das Abschlussmodul 4 umfasst eine Wand 22 und zwei an der Wand 22 angeordnete dritte Verbindungselemente 24. Die dritten Verbindungselemente 24 sind als Schwalbenschwanz ausgebildet und können mit dem ersten Verbindungselement 18 des Batterieträgermoduls 6 eine Schwalbenschwanzverbindung eingehen.

In Fig. 1B ist eine Seitenansicht des Batterieträgers 2 aus Fig. 1A dargestellt. Es ist zu erkennen, dass der Batterieträger 2 an der Seite geschlossen ausgebildet ist. Alternativ ist es ebenfalls möglich, dass die Außenseite der Wände 8 und 10 eine Profilstruktur, insbesondere eine Wabenstruktur, zur Versteifung des Batterieträgermoduls aufweist.

Der in Fig. 1A und 1B gezeigte Batterieträger 2 ist bezüglich eines Einbauzustands nach oben offen ausgebildet, so dass ein Batteriemodul von oben in dem Batterieträger 2 platziert werden kann. Der Batterieträger 2 weist eine Breite b, eine Tiefe t und eine Höhe h auf. In dem hier dargestellten und insoweit bevorzugten Ausführungsbeispiel kann beispielsweise die Breite b 400 mm, die Tiefe t 1.400 mm und die Höhe h 140 mm betragen.

In den Fig. 2A und 2B ist ein zweites Ausführungsbeispiel für einen erfindungsgemäßen Batterieträger 2 dargestellt. In Fig. 2A ist der Batterieträger 2 in einer Seitenansicht dargestellt. Es ist zu erkennen, dass bei diesem Ausführungsbeispiel ein Batteriemodul von der Seite aus in dem Batterieträger 2 platziert werden kann. Die erste Wand 8 ist hier Teil einer Decke des Batterieträgers 2 und die dritte Wand 10 Teil eines Bodens des Batterieträgers 2. Eine Bodenplatte ist bei diesem Ausführungsbeispiel nicht vorgesehen. In dem hier dargestellten und insoweit bevorzugten Ausführungsbeispiel kann beispielsweise die Breite b 140 mm, die Tiefe t 1.400 mm und die Höhe h 140 mm betragen.

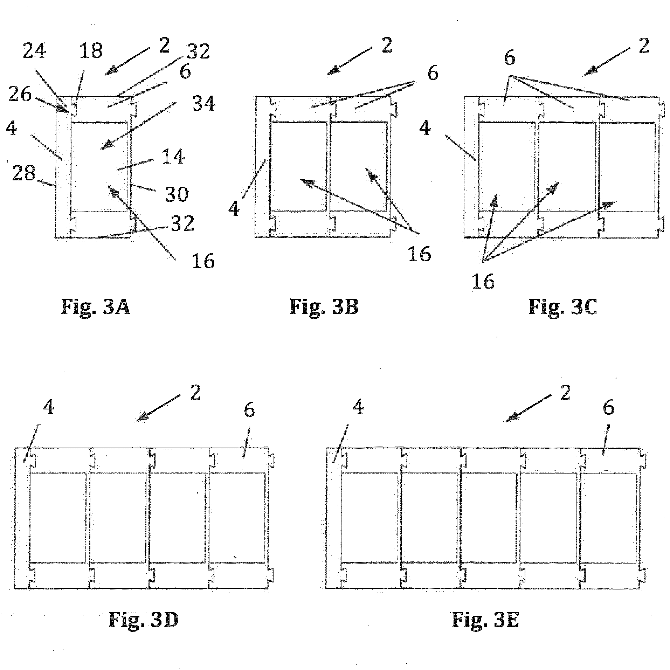

In Fig. 3A ist der Batterieträger 2 aus Fig. 1A im montierten Zustand dargestellt. Es ist zu erkennen, dass das erste, am Batterieträgermodul 6 ausgebildete Verbindungselement 18 mit dem dritten, am Abschlussmodul 4 ausgebildeten Verbindungselement 24 eine Schwalbenschwanzverbindung 26 bildet. Durch Verbindung des Abschlussmoduls 4 mit dem Batterieträgermodul 6 wird eine Batterieaufnahmeeinheit, die zur Aufnahme eines Batteriemoduls geeignet ist, gebildet. Der in Fig. 3A dargestellte Batterieträger 2 weist eine Stirnwand 28 und eine der Stirnwand 28 gegenüberliegende Rückwand 30 auf. Da der Batterieträger 2 zur Platzierung des Batteriemoduls von oben in den Batterieträger 2 ausgebildet es, weist der Batterieträger 28 zwei zueinander parallel angeordnete, die Stirnwand 28 und die Rückwand 30 an ihren jeweiligen Enden jeweils verbindende Seitenwände 32 auf. Das Batterieträgermodul 2 ist mit einer Bodenplatte 14 ausgestattet, so dass der Batterieträger über einen Boden 34 verfügt.

Wie in den Fig. 3B-3E zu erkennen ist, lässt sich der Batterieträger 2 aus Fig. 3A durch Anbringung weiterer Batterieträgermodule 6 beliebig um weitere Batterieaufnahmeeinheiten erweitern. Es wird jeweils zwischen zwei Batterieträgermodulen 6 bzw. zwischen dem Abschlussmodul 4 und dem dem Abschlussmodul 4 benachbart angeordneten Batterieträgermodul 6 ein Aufnahmebereich 16 gebildet.

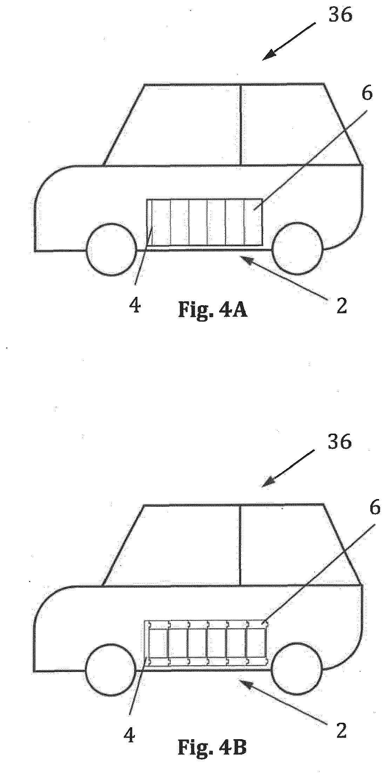

In den Fig. 4A und 4B ist eine beispielhafte Anordnung des Batterieträgers 2 in einem Elektrofahrzeug 36 schematisch dargestellt. Der Batterieträger 2 wird typischerweise mittig im unteren Bereich des Fahrzeugs 36 angeordnet. In Fig. 4A ist ein Batterieträger 2, in welchen sich die Batteriemodule von oben in den Batterieträger 2 platzieren lassen, abgebildet. Fig. 4B zeigt das in Fig. 2A dargestellte Ausführungsbeispiel, bei dem die Batteriemodule von der Seite aus in den Batterieträger 2 platziert werden können.

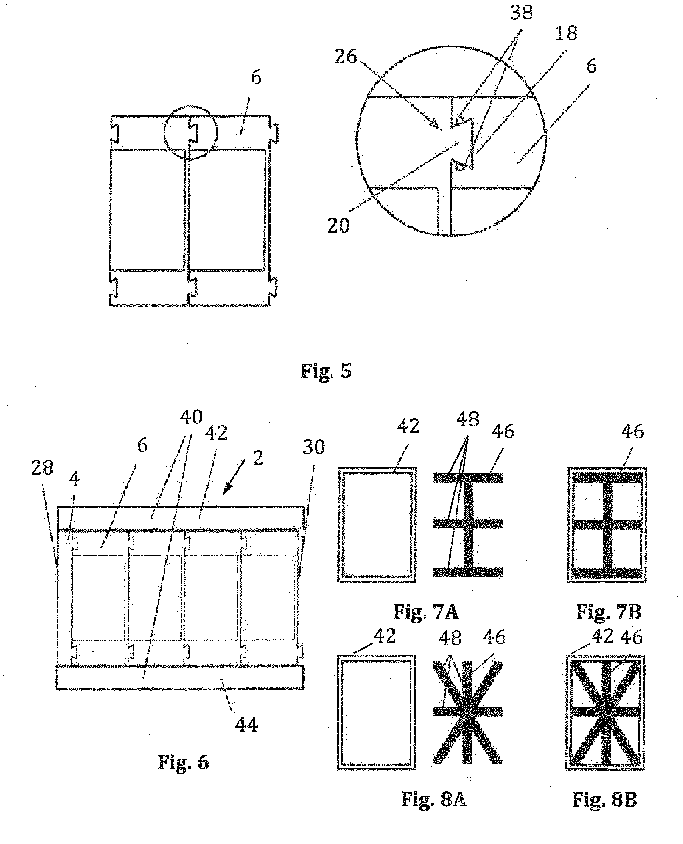

In Fig. 5 ist eine Detailansicht der durch zwei hintereinander angeordneten Batterieträgermodulen 6 gebildeten Schwalbenschwanzverbindung 26 dargestellt. An dem ersten Verbindungselement 18 sind zwei gegenüberliegende Nuten 38 ausgebildet, so dass zwischen dem ersten Verbindungselement 18 und dem zweiten Verbindungselement 20 eine hier nicht dargestellte Dichtung oder ein hier nicht dargestellter Kleber angeordnet werden kann. Dies wirkt sich positiv auf die Dichtigkeit des Batterieträgers 2 aus, so dass teure Schweißverfahren, die eine dichte Verbindung ermöglichen, nicht notwendig sind.

In Fig. 6 ist der Batterieträger 2 aus Fig. 3D mit einem Versteifungsmodul 40 versehen. Das Versteifungsmodul 40 umfasst zwei Rahmenprofile 42, 44, die als Vierkantrohre ausgebildet sind. Das erste Rahmenprofil 42 ist an der einen Seite des Batterieträgers 2 und das zweite Rahmenprofil 44 an der gegenüberliegenden Seite des Batterieträgers 2 angeordnet. Die Rahmenprofile 42, 44 erstrecken sich von der Stirnwand 28 bis zur Rückwand 30. In vertikaler Richtung erstrecken sich die Rahmenprofile 42, 44 vom Boden 34 bis zu einer Oberkante der Batterieträgermodule 6. Die Rahmenprofile 42, 44 können mit bekannten Befestigungsmitteln an den Batterieträgermodulen 6 und/oder dem Abschlussmodul 4 befestigt werden. Bei einem Seitenaufprall schützt das Versteifungsmodul 40 vor von außen einwirkenden Kräfte und wirkt sich so positiv auf die Crash-Sicherheit des Fahrzeugs aus.

In den Fig. 7A und 7B ist ein Rahmenprofil 42 eines Versteifungsmoduls 40 mit einem Einsatz 46 abgebildet. In Fig. 7B ist der Einsatz 46 in das Rahmenprofil 42 eingeschoben. Das Rahmenprofil 42 weist einen rechteckigen Querschnitt auf. Der Einsatz 46 umfasst mehrere miteinander verbundene Stege 48, die im montierten Zustand an einer Innenfläche des Rahmenprofils 42 anliegen. Der Einsatz 46 wirkt sich versteifend auf die Struktur des Rahmenprofils 42 aus, so dass das Versteifungsmodul 40 eine vergleichsweise starke versteifende Wirkung auf den Batterieträger ausüben kann. Da der Einsatz 46 einfach in das Rahmenprofil 42 eingeschoben werden kann, kann die gewünschte Steifigkeit des Versteifungsmoduls 40 mit geringfügigem Aufwand angepasst werden. Der Einsatz 46 kann mittels Nieten oder anderen Befestigungsmitteln, wie beispielsweise einer Schweißverbindung, mit dem Rahmenprofil 42 verbunden werden.

In den Fig. 8A und 8B ist ein weiteres Beispiel für ein Rahmenprofil 42 mit einem alternativen Einsatz 46 dargestellt, der sich ebenfalls versteifend auf das Versteifungsmodul 40 auswirkt.

Die in dieser Spezifikation beschriebenen beispielhaften Ausführungsformen/Ausführungsbeispiele der vorliegenden Erfindung sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Bezugszeichenliste

- 2: Batterieträger
- 4: Abschlussmodul
- 6: Batterieträgermodul
- 8: erste Wand des Batterieträgermoduls 6
- 10: zweite Wand des Batterieträgermoduls 6
- 12: dritte Wand des Batterieträgermoduls 6
- 14: Bodenplatte
- 16: Aufnahmebereich
- 18: erstes Verbindungselement
- 20: zweites Verbindungselement
- 22: Wand
- 24: drittes Verbindungselement
- 26: Schwalbenschwanzverbindung
- 28: Stirnwand
- 30: Rückwand
- 32: Seitenwand
- 34: Boden
- 36: Elektrofahrzeug
- 38: Nut
- 40: Versteifungsmodul
- 42,44: Rahmenprofil
- 46: Einsatz
- 48: Steg

## Patentansprüche

1. Batterieträgermodul (6) zur Bildung eines mit einer Fahrzeugkarosserie verbindbaren, insbesondere aus einer Aluminiumgusslegierung gebildeten, Batterieträgers (2), umfassend:
einen Aufnahmebereich (16) zur Aufnahme zumindest eines als Antriebsenergiespeicher für ein elektrisch angetriebenes Fahrzeug (36) dienenden Batteriemoduls,
wenigstens drei miteinander verbundene Wände (8, 10, 12), und
eine erste Außenseite und eine zweite Außenseite,
wobei an der ersten Außenseite wenigstens ein erstes Verbindungselement (18) und an der zweiten Außenseite wenigstens ein zu dem ersten Verbindungselement (18) korrespondierendes zweites Verbindungselement (20) angeordnet ist, und
wobei die Wände (8, 10, 12) und die Verbindungselemente (18, 20) derart angeordnet sind, dass mehrere, vorzugsweise gleichartige, Batterieträgermodule (6) in Reihe miteinander verbindbar sind.

2. Batterieträgermodul nach Anspruch 1,
**dadurch gekennzeichnet,**
**dass** die wenigstens drei miteinander verbundenen Wände (8, 10, 12) eine erste Wand (8), eine zweite, im Wesentlichen parallel zu der ersten Wand (8) angeordnete Wand (10) und eine dritte, die erste und die zweite Wand (8, 10) verbindende Wand (12) umfassen, und
- **dass** die wenigstens drei miteinander verbundenen Wände (8, 10, 12) im Wesentlichen ein U-Profil bilden.

3. Batterieträgermodul nach Anspruch 2,
**dadurch gekennzeichnet,**
**dass** die erste Wand (8) und die zweite Wand (10) jeweils ein mit der dritten Wand (12) verbundenes Ende und jeweils ein freies Ende aufweisen, und dass an den freien Enden der ersten und der zweiten Wand (8, 10) jeweils ein erstes Verbindungselement (18) und an den über die dritte Wand (12) miteinander verbundenen Enden der ersten und der zweiten Wand (8, 10) jeweils ein zweites Verbindungselement (20) angeordnet ist.

4. Batterieträgermodul nach einem der Ansprüche 1 bis 3,
**dadurch gekennzeichnet,**
**dass** das wenigstens eine erste und das wenigstens eine zweite Verbindungselement (18, 20) zur Bildung einer formschlüssigen Verbindung miteinander, insbesondere zur Bildung einer Schwalbenschwanzverbindung (26), ausgebildet sind.

5. Batterieträgermodul nach einem der Ansprüche 1 bis 4,
**dadurch gekennzeichnet,**
**dass** an dem wenigstens einen ersten und/oder dem wenigstens einen zweiten Verbindungselement (18, 20) eine Nut (38) zur Aufnahme eines Klebers und/oder einer Dichtung ausgebildet ist.

6. Batterieträgermodul nach einem der Ansprüche 1 bis 5,
**dadurch gekennzeichnet,**
**dass** in zumindest einer der Wände (8, 10, 12) wenigstens ein Kühlkanal zur Kühlung von in dem Batterieträger (2) aufgenommenen Batteriemodulen und/oder wenigstens ein Elektronikkanal zur Unterbringung von elektronischen Bauteilen ausgebildet ist.

7. Batterieträgermodul nach Anspruch 6,
**dadurch gekennzeichnet,**
**dass** der wenigstens eine Kühlkanal und/oder der wenigstens eine Elektronikkanal Durchgänge an der ersten und/oder an der zweiten Außenseite aufweist.

8. Batterieträgermodul nach einem der Ansprüche 1 bis 7,
**dadurch gekennzeichnet,**
**dass** das Batterieträgermodul (6) ferner eine Bodenplatte (14) umfasst.

9. Batterieträgermodul nach Anspruch 8,
**dadurch gekennzeichnet,**
**dass** die Bodenplatte (14) wenigstens einen Kühlkanal zur Kühlung von in den Batterieträger (2) aufnehmbaren Batteriemodulen und/oder wenigstens einen Elektronikkanal zur Unterbringung von elektronischen Bauteilen aufweist.

10. Batterieträgermodul nach einem der Ansprüche 1 bis 9,
**dadurch gekennzeichnet,**
**dass** das Batterieträgermodul (6) einstückig ausgebildet ist.

11. Batterieträger (2) umfassend
wenigstens ein Batterieträgermodul (6) nach einem der Ansprüche 1 bis 10 und zumindest ein mit dem wenigstens einen Batterieträgermodul (6) verbundenes Abschlussmodul (4), und/oder
wenigstens zwei miteinander verbundene Batterieträgermodule (6) nach einem der Ansprüche 1 bis 10.

12. Batterieträger nach Anspruch 11,
**dadurch gekennzeichnet,**
**dass** der Batterieträger (2) wenigstens zwei Batterieträgermodule (6) und zumindest ein Abschlussmodul (4) umfasst.

13. Batterieträger nach Anspruch 11 oder 12,
**dadurch gekennzeichnet,**
**dass** das Abschlussmodul (4) wenigstens eine Abschlusswand (22) und wenigstens ein an der Abschlusswand (22) angeordnetes drittes Verbindungselement (24) aufweist,
wobei das dritte Verbindungselement (24) korrespondierend zu einem an der ersten Außenseite des Batterieträgermoduls (6) angeordneten ersten Verbindungselement (18) ausgebildet ist und
wobei das Abschlussmodul (4) mit dem wenigstens einen Batterieträgermodul (6) über das wenigstens eine dritte Verbindungselement (24) und das wenigstens eine erste Verbindungselement (18) verbunden ist.

14. Batterieträger nach einem der Ansprüche 11 bis 13,
**dadurch gekennzeichnet,**
**dass** der Batterieträger (2) ferner ein Versteifungsmodul (40) umfasst, wobei das Versteifungsmodul (40) mindestens ein erstes und ein zweites Rahmenprofil (42, 44) aufweist,
wobei das erste und das zweite Rahmenprofil (42, 44) insbesondere als Vierkantrohre ausgebildet sind und insbesondere einen im Wesentlichen rechteckigen und besonders bevorzugt einen im Wesentlichen quadratischen Querschnitt aufweisen,
wobei das erste Rahmenprofil (42) an einer ersten Seite des Batterieträgers (2) und das zweite Rahmenprofil (44) an einer der ersten Seite gegenüberliegenden zweiten Seite des Batterieträgers (2) angeordnet ist.

15. Batterieträger nach Anspruch 14,
**dadurch gekennzeichnet,**
**dass** das Versteifungsmodul (40) zur Versteifung der Rahmenprofile (42, 44) Einsätze (46) aufweist,
wobei die Einsätze (46) in die Rahmenprofile (42, 44) eingeschoben sind und wobei die Einsätze (46) mit den Rahmenprofilen (42, 44), insbesondere über Nieten, verbunden sind.
